# EUROPEAN PATENT APPLICATION

(11) **EP 1 970 023 A1**
(43) Date of publication of application: **17.09.2008**
(21) Application number: 07104271.7
(22) Date of filing: 15.03.2007
(51) Int. Cl.: A61C 5/08, A61C 5/10, A61C 13/09

(54) **Modular tooth veneer**

(71) Applicant: Rock, Shmuel, Carmiel (IL); KUPERSTEIN, Yuli, Nes Ziona (IL)
(72) Inventor: Rock, Shmuel, Carmiel (IL); KUPERSTEIN, Yuli, Nes Ziona (IL)
(74) Representative: Sarpi, Maurizio

(57) **Abstract**

A Modular Tooth Veneer system, comprising at least one MTV unit (100) having a cephalic body (158), an elongate buccal body (150) extending from the cephalic body, and a lingual body (184) extending from the cephalic body, the lingual body being spaced a distance from the buccal body.
The present invention also covers a method for creating a Modular Tooth Veneer unit, the method including:
- forming an MTV uni based on real human tooth shape; and
- providing a lingual tab (156) on the MTV unit.

## Description

### FIELD OF THE INVENTION

The present invention relates to prefabricated modular tooth veneers installed on an oral support frame or on pre-prepared teeth. More specifically, the present invention provides a system, using modular tooth veneers, for producing an oral prosthetic in minimal time. (This is not the place for specific variations - just the general field)

### BACKGROUND OF THE INVENTION

Creating an aesthetically pleasing oral prosthesis, comprising one or more prosthetic teeth on a support frame, is an exacting process. After separately preparing a wide variety of dentin paste colors from powders, a laboratory technician must apply each color separately to the support frame with a fine brush, building each individual tooth with appropriate shape, color, depth and shade.

The subsequent firing to harden, herein cure, the dentin paste, shrinks each cured tooth by 20% to 30%. After curing, the shape, color and shade of each tooth must be restored in multiple time-intensive application steps; each step requiring firing and often accompanied by grinding, polishing and/or application of enamel.

As used herein, "dentin" is the bonding material used in bonding the tooth to the frame, and building the tooth shape. "Enamel", as used herein, is a material used on the exterior of the tooth.

To reduce the number of steps, US Patent 6,250,926 to Foser et al and assigned to Ivoclar Vivadent AG, teach a preshaped tooth veneer that is adhered only to the buccal and cephalic support frame surfaces, thereby providing inadequate bonding strength, often leading to failure due to the stress of chewing.

Additionally, US Patent 6,250,926 fails to specify critical structural requirements for posterior veneers, thereby limiting its teaching to the frontal teeth; e.g. incisors and canines. Additionally, the veneers are limited to approximate hand sculpted tooth shapes, rather than precision tooth models; the sculpted tooth shapes requiring additional steps to achieve tooth shape.

Moreover, US Patent 6,250,926 teaches veneers that are manufactured exclusively in precious metal ceramics, thereby ignoring the greater part of the market dealing in prostheses from non-precious metal, zirconium, and aluminum oxide ceramics as well as wax, composite and acrylic.

As used herein, an MTV unit in a given material, for example zirconium, is installed using compatible dentin and/or enamels, on a support frame of a compatible material, for example zirconium.

### SUMMARY OF THE INVENTION

An aspect of an embodiment of the present invention provides a prosthetic system comprising multiple precisely modeled Modular Tooth Veneer (MTV) units that do not shrink during curing, reducing the number of steps dedicated to shaping oral prosthetic teeth. In addition, MTV teeth are offered in multiple units, each duplicating the type, color, and shade of real human tooth, additionally reducing number of steps required to achieve appropriate color and shade in the finished prosthesis.

In an exemplary embodiment, MTV units are typically provided in wax, acrylic, composite and/or a variety of ceramic MTV units, each with appropriate dentin and support frames, so that prostheses can be rapidly manufactured in virtually any material. Optionally an identification code is provided with each MTV unit, identifying shape, size, color and material so that by matching the wax unit codes in a mockup demonstration model, a laboratory can readily produce a final ceramic prosthesis, for example, by using ceramic teeth with the same codes as those of the wax MTV units.

Additionally, all MTV units, whether frontal or posterior units, are designed to maintain substantial stability and strength during the curing process, ensuring longevity in the finished prosthetic. As used herein, "frontal unit" refers to an MTV unit comprising one of the six frontal tooth types including incisors and canines of either the upper or lower jaws. As used herein, "posterior unit" refers to an MTV unit comprising at one of the eight posterior tooth types including pre-molars and molars of either the upper or lower jaws.

### BRIEF DESCRIPTION OF THE DRAWINGS

Exemplary non-limiting embodiments of the invention described in the following description, read with reference to the figures attached hereto. In the figures, identical and similar structures, elements or parts thereof that appear in more than one figure are generally labeled with the same or similar references in the figures in which they appear. Dimensions of components and features shown in the figures are chosen primarily for convenience and clarity of presentation and are not necessarily to scale. The attached figures are:
Fig. 1 is a frontal MTV unit, in accordance with an embodiment of the present invention;
Fig. 2 is a side cutaway view of the MTV unit of Fig. 1, installed on a support frame, in accordance with an embodiment of the present invention;
Figs. 3 and 4 are pre-molar and molar MTV units, respectively, in accordance with an embodiment of the present invention;
Fig. 5 is a prepared plaster positive in the process of receiving MTV frontals, in accordance with an embodiment of the present invention; and
Fig. 6 is vacuum-formed demonstration prosthesis, prepared for insertion in a recipient's mouth, in accordance with an embodiment of the present invention.

### DESCRIPTION OF EXEMPLARY EMBODIMENTS

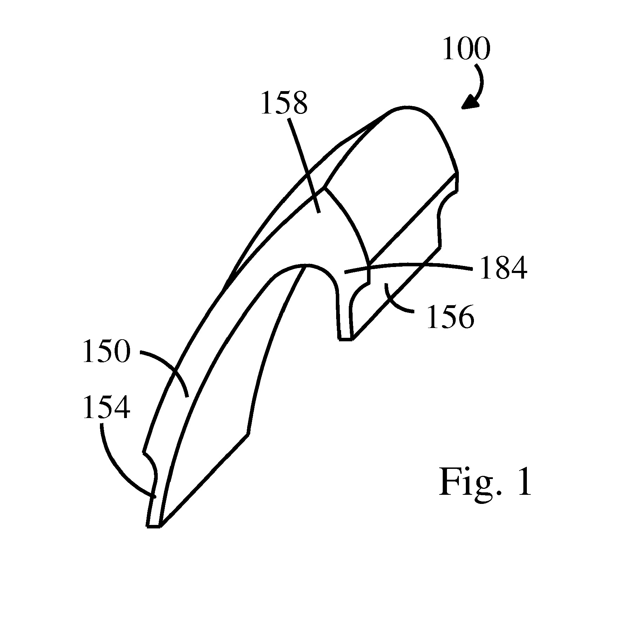

As seen in Fig. 1, a frontal MTV 100 comprises a cephalic body 158 from which extend a buccal body 150 and a lingual body 184. MTV units 100 are typically offered in wax, acrylic, ceramic and composite so that a finished prosthesis in acrylic, ceramic or composite can be easily fashioned once the recipient has approved a wax demonstration mockup.

In an exemplary embodiment, each MTV unit 100 has a lingual body that provides substantial bonding strength. Additionally, the buccal 150 and lingual 184 bodies of the MTV form an angle that varies in obliquity to provide substantial stability in each type of frontal and posterior MTV 100.

As used herein, "lingual body", refers to the posterior, lingual and/or occlusal portion of the frontal and posterior teeth. Further, as used herein, "buccal body" refers to labial and buccal tooth portions of the frontal and posterior teeth.

Each MTV 100 unit is already cured, reducing the amount of shrinkage during firing and the associated steps in compensating for the shrinkage. Additionally, the present invention provides multiple common shapes and sizes of MTV 100 in each tooth type so that an MTV 100 can be chosen that closely approximates the tooth being replaced. Further, the shape of each MTV 100 is made using a precision mold of a human tooth, for example using tooth casts, rapid prototyping, and/or three dimensional jaw or tooth scans. Additionally, MTV units will be offered that are based upon existing tooth types, shapes, sizes and color existing already on the market in full dentures. The present system further envisions providing precision MTV units that vary according to gender, for example with female incisor teeth, for example, being generally more rounded than male incisor teeth.

In addition to providing an MTV 100 unit with precise shape and color, each MTV 100 unit incorporates three or more shaded volumes, providing a pre-formed veneer that requires few steps to modify shading. In addition to reducing the many steps involved in fashioning a prosthesis, the MTV 100 veneer reduce reliance on specially trained artisans that are typically used in prosthetic fabrication of prior art oral prostheses, thereby further reducing the end product cost.

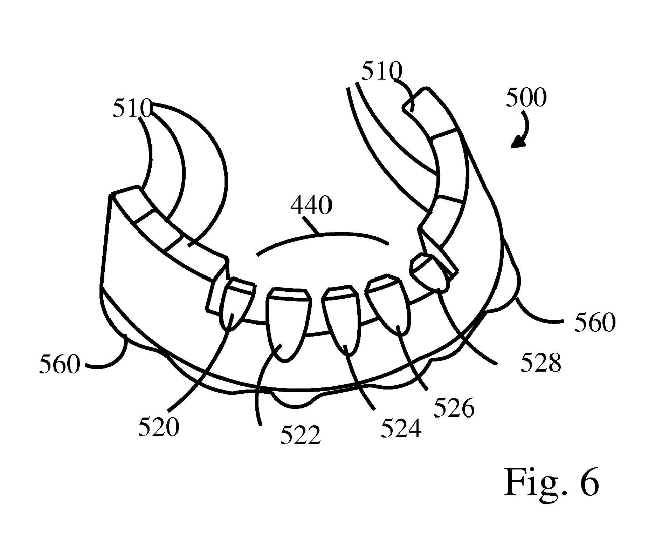

The MTV system additionally includes demonstration kits that are distributed to operators, the demonstration kits including at least one base jaw model, for example a plastic version of a base model 500 seen in Fig. 6, and multiple common shapes and sizes of MTV 100 in each tooth type that readily connect and disconnect from base model 500. Alternatively or additionally, catalogues of all available MTV 100 units are provided to the operator. Demonstration kits and/or catalogues allow the operator to easily provide a mockup demonstration, obtain recipient input on preferred MTV 100 units, and a code system by which changes in preferred MTV 100 units can be easily communicated with the laboratory.

As used herein, oral prostheses comprise wax, acrylic, composite and/or ceramic MTV units and correspondingly appropriate dentin and support frames. Further, ceramic prostheses comprise ceramic MTV units and dentin that are appropriate for installation with support frames that include, inter alia, zirconium oxide, aluminum oxide, titanium, precious metal and non-precious metal, for example chrome cobalt.

As used herein, acrylic materials refers to any prosthesis formed from a combination of acrylic powder polymer and a monomer liquid. As used herein, composite materials comprise any material compose of glass or ceramic particles having light sensitive filler that, upon exposure to light, cures the composite material.

Optionally, an operator, for example a dentist has the option to provide the recipient with a finished prosthetic, for example in acrylic or composite MTV 100 units on an appropriate acrylic support frame, without sending the wax mockup to the laboratory. This is possible because acrylic and composite MTV 100 units, unlike ceramic, can be cured without firing.

Alternatively or additionally, the operator may opt to apply MTV unit 100, for example from acrylic or composite, directly to a pre-pared tooth stump, using the appropriate dentin to bond MTV 100 unit to the stump.

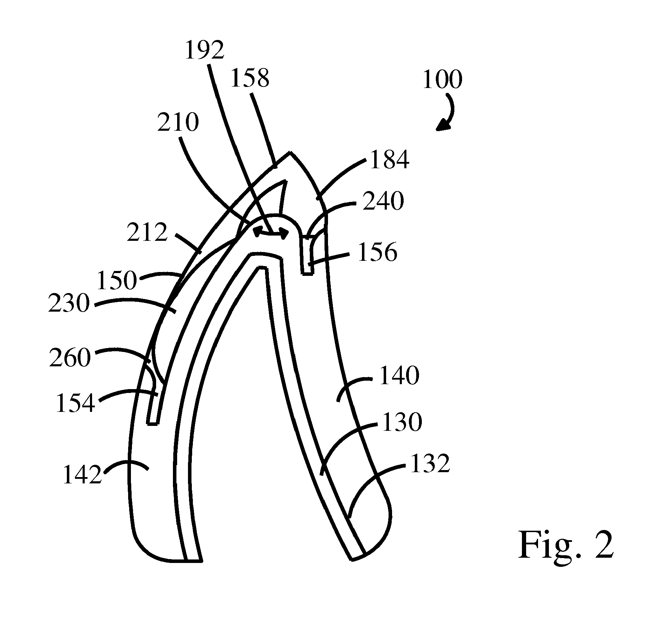

MTV 100, shown in a cutaway view in Fig. 2, typically includes translucent volumes that impart realistic shading to MTV 100 and reduce the number of steps required in applying colors to MTV. For example a cephalic central volume 210 is substantially transparent and comprises a height of approximately 1 millimeter. A cephalic frontal volume 212 is between 60% and 70% translucent; a mid-buccal volume 230 is 30% to 40% translucent, a lower buccal volume 260 is 80% transparent and a lingual volume 240 is 80% translucent.

To reduce shrinkage during firing, bonding dentin 140 and 142 have a coefficient of expansion that is similar to, or duplicates, the expansion coefficient of support frame 130 and MTV 100. However, even with appropriate coefficient of expansion, shrinkage of 20% shrinkage or more occurs in bonding dentin 140 and 142 during firing and curing, resulting in misalignment and instability in cured MTV 100 unit. To this end, lingual body 184 and an offset tab 156 typically cover at least 20% of a support frame 130, thereby stabilizing MTV 100 during firing and imparting substantial strength in cured MTV 100.

In an exemplary embodiment, frontal MTV 100 units include lingual body 184 and buccal body 150 that join at an angle 192 that is between 20 - 25 degrees, depending upon the shape of frame 130 and/or the shape and size of the recipient's mouth. Angle 192 provides further stability of MTV 100, for example during firing and upon installation in the recipient mouth.

In an exemplary embodiment, lingual body 184 includes lingual offset tab that has a smaller transverse thickness than lingual body 184. Similarly, buccal body 150 includes a buccal offset tab 154 that has a smaller transverse thickness than buccal body 150. The overlay of bonding dentin 140 and 142 on lingual 156 and buccal 154 tabs, respectively, provides additional structural reinforcement in the bond between MTV 100 and support frame 130.

All structural features, for example, shape, coloring, and shading are applicable to MTV 100 units in wax, ceramic, acrylic and composite. Additionally, lingual 156 and buccal 154 tabs are applicable to units in ceramic, acrylic and composite and, optionally, to MTV 100 units in wax.

In an exemplary embodiment, ceramic shell MTV 100 units are provided in a variety of ceramic materials whose coefficient of expansion are adapted to a variety of support frames; including, inter alia, zirconium oxide frame aluminum oxide frame, titanium frame, precious metal frame and non-precious metal (chrome cobalt).

As in prior art prosthetics, frame 130 in ceramic is typically coated using a thin layer of opaque ceramic 132, so frame 130 compliments the color of MTV 100. Additionally, colored dentin ceramic material 140 and 142 comprising a ceramic paste or wet ceramic powder is also typically colored to compliment the color of MTV 100. The firing temperature to cause bonding dentin 140 and 142 to cure is typically less than the thermal deformation temperature of MTV 100, for example by 50 degrees Celsius. However, the difference of 50 degrees may be increased or decreased depending on the materials used.

Typically, enamel coloring is added to buccal body 150, lingual 184 and cephalic 158 bodies and extend coloring onto buccal bonding dentin 142 and lingual bonding dentin 140 providing a natural translucent-to-opaque gradient.

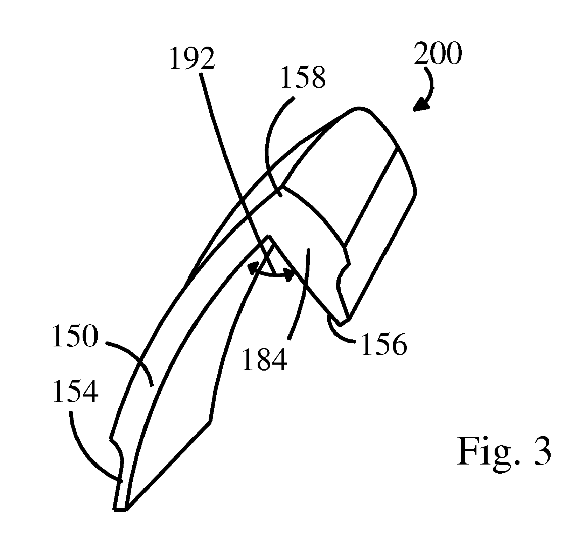

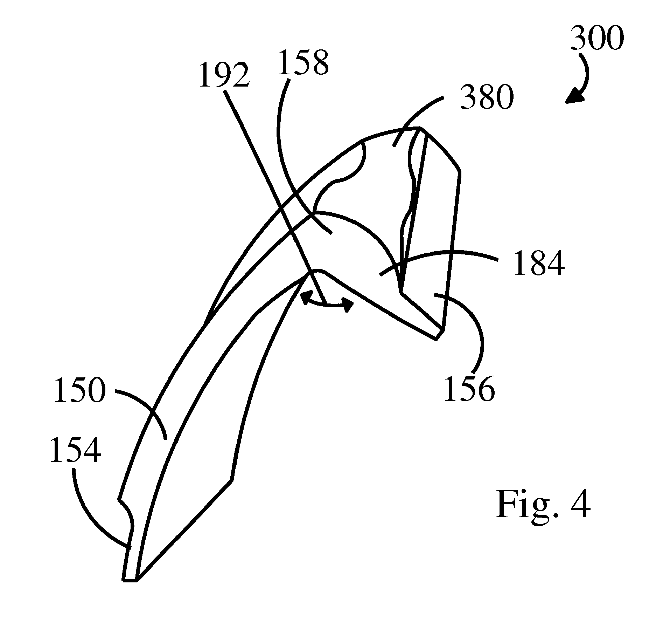

When multiple MTV 100 units are used, for example, in a full mouth prosthetic, enamel coloring is typically added to all MTV 100 units once MTV units 100 have attained an appropriate size, shape and color. Enameled MTV units 100 provide the recipient with an aesthetically pleasing prosthesis, including posterior MTV premolar 200 units, seen in Fig. 3 and MTV molar units 300, seen in Fig. 4.

As used herein, support frame 130 installs over the patient jaw tissue as a denture, or is modified to be installed in conjunction with one or more implants posts (not shown) that are implanted, for example, in the recipient jaw.

In an exemplary embodiment, premolar 200 and molar 300 MTV units include buccal body 150, cephalic body 158 and lingual body 184 and uses similar translucent volumes to that of lingual body 184 cephalic 158 bodies of MTV 100 (Fig. 2) to achieve appropriate shading.

In an exemplary embodiment, angle 192 of pre molar 200 (Fig. 3) is typically between 65 - 80 degrees, depending upon the angle of the support frame and/or the jaw structure of the recipient mouth.

Further angle 192 of molar 300 (seen in Fig. 4) is typically between 65 - 80 degrees, depending upon the angle of the support frame and/or the jaw structure of the recipient mouth.

### Method

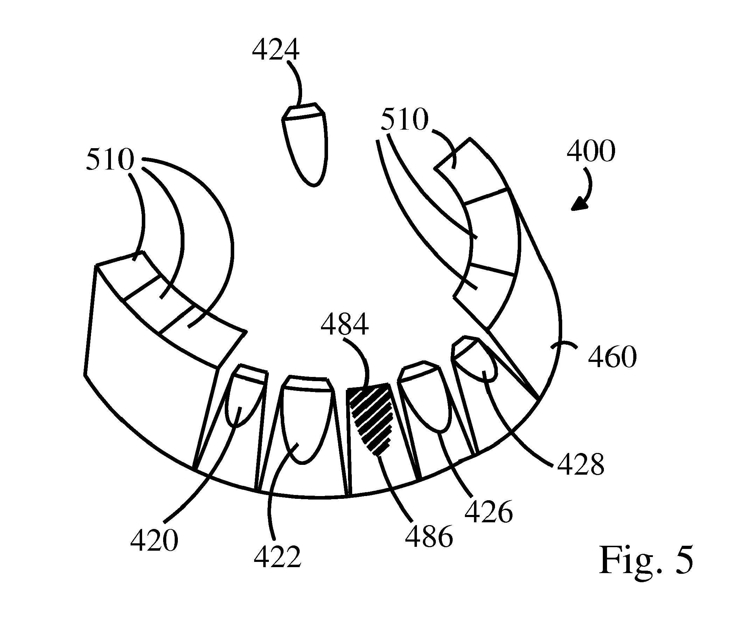

Typically, the operator, for example, a dentist, will take a mouth impression, that is sent to a laboratory that forms a positive plaster impression 400 (Fig. 5). The laboratory grinds a frontal portion 440 and bonds MTV wax shells 420, 422, 426 and 428 to an impression mock-up 460. An MTV shell 424 is shown in the process of being attached to a grounded base 484, typically using wax bonding material 486, known in the art.

Each of wax shells 420, 422, 424, 426 and 428 include a code that identifies the type of tooth, the side, shape and color so that matching the recipient's natural teeth is readily accomplished to from mock-up 460.

As used herein, "side" refers to the buccal body depth measured along a cross sectional ray that is perpendicular to the midpoint of a ray running through the longitudinal axis of the buccal body.

Additionally, for example, to allow the operator to call the laboratory and identify alternative shapes or colors preferred by the recipient, the identification code is recorded in a recipient file that is available to the operator. As used herein, "identification code" includes any combination of numbers, shapes, symbols, and colors that identify the type, color, shape and shade of MTV unit 424; with such identification code being included on MTV 100 unit (Fig. 1), mockup 486 and or packaging associated therewith.

Typically, the operator fills MTV shell 424 with elastic composite acrylic 560 and puts shell 424 in the patient mouth to demonstrate the shape and size of frontal 520, 522, 524, 526 and 528 and posterior 510 teeth.

At the request of the recipient, the operator provides alternative teeth 520, 522, 524, 526 and 528, based on catalogue or demonstration kit MTV units 100 noted above. Following recipient approval, the operator uses the identification code of each replaced unit 520, 522, 524, 526 and 528 to apprise the laboratory of the identification codes of the teeth to be substituted on wax mockup 460.

In cases where the operator manually makes manual modifications to mock-up 460, for example grinding units 520, 522, 524, 526 and/or 528, the operator sends mock-up 460 to the laboratory along with notes pertaining to codes changes associated with alternative units 520, 522, 524, 526 and/or 528.

In an exemplary embodiment, the laboratory uses the revised wax mockup 460 (Fig. 4), composite shell 500, and/or unit identification code changes, to provide the operator with a new vacuum-formed frontal composite shell 500 to demonstrate in the recipient mouth.

Once the recipient is satisfied with the shape, size and coloring of composite shell 500, the operator typically puts an acrylic paste 560 into shell 500 and makes a temporary prosthesis for the recipient using methods known in the art. Alternatively, the laboratory provides a temporary prosthesis for the recipient, using wax mockup 460 (Fig. 4) as a model using methods known in the art.

After approval of demonstration mockup 500, the identification codes of each of teeth 520, 522, 524, 526 and 528 are used to choose appropriate MTV units 100 (Fig. 1) in acrylic, composite and ceramic that duplicate the type, size, coloring and shape of demonstration mock up 500.

Additionally, the many structure reinforcements noted above, for example tabs 154 and 156 and lingual body 184 (Fig. 1), in ceramic, composite or acrylic MTV 100 units that replace wax MTV units 420, 422, 424, 426 and 428 (Fig. 4) foster proper positioning in spite of shrinkage during firing and structurally strong.

### Epilogue

The invention has been described with respect to wax, ceramic, acrylic and composite materials citing but a few of the many options that are available.

The myriad of materials, their manufacturers and the methods for producing wax or composites MTV 100 units and their corresponding bonding dentin 140 and 142 and support frames 130 are well known to those familiar with the art.

While the invention has been described with respect to a limited number of embodiments, it will be appreciated that many variations, modifications and other applications of the invention may be made. Also, combination of elements from variations may be combined and single elements may be used. Such variations and modifications, as well as others that may become apparent to those skilled in the art are intended to be included within the scope of the invention, as defined by the appended claims.

The terms "include", "comprise" and "have" and their conjugates as used herein mean "including but not necessarily limited to."

It will be appreciated by a person skilled in the art that the present invention is not limited by what has thus far been described. Rather, the scope of the present invention is limited only by the following claims.

## Claims

1. A Modular Tooth Veneer system, comprising at least one MTV unit having:
- a cephalic body;
- an elongate buccal body extending from the cephalic body; and
- a lingual body extending from the cephalic body, the lingual body being spaced a distance from the buccal body.

2. The MTV system according to claim 1, in which the at least one MTV unit comprises at least one of:
- six frontal tooth types; and
- eight posterior tooth types.

3. The MTV system according to claim 2, wherein the at least one MTV unit comprises at least three MTV units, including:
at least one MTV unit in wax;
- at least one MTV unit in acrylic; and
- at least one MTV unit in composite.

4. The MTV system according to claim 3, in which the at least three MTV units are adapted to be installed on at least one of:
a support frame; and
- a prepared tooth base.

5. The MTV system according to claim 4, wherein the at least three MTV units comprise at least four MTV units, including at least one MTV unit in a ceramic material, such that the MTV ceramic material is suitable for installation on a support frame comprising at least one of:
zirconium oxide;
- aluminum oxide;
- titanium;
- precious metals; and
- non-precious metal.

6. The MTV system according to claim 5, in which the at least four MTV units include:
a lingual offset tab adapted to be at least partially covered by at least one of:
- dentin; and
- enamel.

7. The MTV system according to claim 6, in which the at least four MTV units include:
- a buccal offset tab adapted to be at least partially covered by at least one of:
- dentin; and
- enamel.

8. The MTV system according to claim 7, in which the at least four MTV units include:
- a buccal body length measured along the longitudinal axis of the buccal body;
- a lingual body length measured along the longitudinal axis of the lingual body;
such that the lingual body length is at least 15% of the buccal body length.

9. The MTV system according to claim 8, in which the at least four MTV units include:
- a buccal side of at least 0.5 millimeter.

10. The MTV system according to claim 9, in which the at least four MTV units include:
- a buccal body including at least two shade volumes, the at least two shade volumes being visible at the buccal surface of the buccal body.

11. The MTV system according to claim 10, in which the at least four MTV units include:
- a third shade volume within the cephalic body, the cephalic portion body shading being visible on the cephalic body surface,
- the visible cephalic shade being different than the at least two shade volumes visible on the buccal body surface.

12. The MTV system according to claim 11, in which the at least four MTV units are formed from precision molds of a human tooth, using at least one of the following methods:
- tooth casts;
- rapid prototyping; and
- three dimensional tooth scans.

13. The MTV system according to claim 12, in which the at least four MTV units include:
- at least one identification code identifying MTV tooth type such that a same tooth type unit of each of the MTV materials include the same tooth type identification code.

14. The MTV system according to claim 13, in which the at least four MTV units include:
- at least one identification code, identifying MTV unit material, such that the all units of the same material contain at least one same identification code.

15. The MTV system according to claim 14, in which the at least four MTV units include:
- at least one identification code that identifies MTV side size; and
- at least one identification code that identifies MTV shade volumes,
- such that the all MTV units having of the same side contain at least one same identification code; and
- all MTV units having of the same shade volumes contain at least one same identification code.

16. The MTV system according to claim 15, in which the at least four MTV units are distinguished by at least one of:
- color, and including at least one identification code that identifies the MTV unit color; and
- size, and including at least one identification code that identifies MTV unit size,
- such that all MTV units having the same color have at least one same identification code; and
- all MTV units having the same color have at least one same identification code.

17. The MTV system according to claim 16, in which the MTV unit identification includes at least one:
- number;
- shape;
- symbol; and
- color.

18. A method for creating a Modular Tooth Veneer (MTV) unit, the method including:
- forming an MTV unit based on a real human tooth shape; and
- providing a lingual tab on the MTV unit.

19. A method according to claim 18, including forming an MTV unit from at least one material, including:
- wax;
- acrylic;
- composite; and
- ceramic.

20. A method according to claim 19, including providing an identification code for the MTV unit that identifies at least one of:
- the MTV unit shape; and
- the MTV unit material
